# FASCICULE DE BREVET EUROPEEN

(11) **EP 4 440 883 B1**
(45) Date de publication et mention de la délivrance du brevet: **12.11.2025**
(21) Numéro de dépôt: 22821399.7
(22) Date de dépôt: 21.11.2022
(51) Int. Cl.: B32B 17/10, B33Y 80/00, B60R 11/04

(54) **PROCEDE DE FABRICATION D'UN VITRAGE COMPRENANT UNE EMBASE DESTINEE A UN SYSTEME D'ASSISTANCE A LA CONDUITE D'UN VEHICULE AUTOMOBILE, EMBASE ET VITRAGE**
VERFAHREN ZUR HERSTELLUNG EINER VERGLASUNGSEINHEIT MIT EINER BASIS FÜR EIN FAHRERASSISTENZSYSTEM EINES KRAFTFAHRZEUGS, BASIS UND VERGLASUNGSEINHEIT
METHOD FOR MANUFACTURING A GLAZING UNIT COMPRISING A BASE INTENDED FOR A DRIVING ASSISTANCE SYSTEM OF A MOTOR VEHICLE, BASE AND GLAZING UNIT

(30) Priorité: 30.11.2021 FR 2112753
(43) Date de publication de la demande: 09.10.2024
(73) Titulaire: Saint-Gobain Sekurit France, 60150 Thourotte (FR)
(72) Inventeur: SILVESTRINI, Laurent, 92400 Courbevoie (FR); SEIBEL, Viktor, 52134 Herzogenrath (DE); DE RUITER, Diederick, 4702 VW Breda (NL)
(74) Mandataire: Saint-Gobain Recherche
(86) Numéro de dépôt international: PCT/EP2022/082613
(87) Numéro de publication internationale: WO 2023/099261

(56) Documents cités:
- EP-A2- 0 269 519
- WO-A1-2017/093264
- WO-A1-2019/045991
- DE-A1- 102011 114 850
- DE-A1- 102019 124 365
- US-A1- 2015 015 713

## Description

L'invention concerne un procédé de fabrication d'un vitrage comportant un élément vitré et une embase pour un capteur de lumière d'un système d'assistance à la conduite de véhicule, ledit système comprenant ainsi un capteur de lumière, tel qu'une caméra, ladite embase présentant des moyens de fixation dudit capteur de lumière et un emplacement d'obturation.

Il est connu de l'état de la technique la demande de brevet internationale WO 2016/145431 A1 divulguant un système de caméra pour assister le conducteur d'un véhicule automobile dans sa conduite. Un tel système comporte une embase, destinée à être fixé au pare-brise du véhicule automobile, dans lequel est montée une caméra orientée vers l'avant. Le champ de vision de la caméra est par conséquent orienté vers l'avant du véhicule automobile. Un tel système surveille l'environnement pour collecter et transmettre des informations à des systèmes de traitement intégrés au véhicule automobile permettant d'analyser la signalisation routière, la présence d'un piéton ou d'un autre véhicule, etc. Afin d'obtenir des images exploitables par les systèmes de traitement, il est important de réduire la réflexion de lumière sur l'embase dans le champ de vision de la caméra. Par exemple, la lumière provenant du soleil ou des phares d'un autre véhicule peuvent perturber la qualité des images acquises par la caméra. L'embase du système de caméra comprend un écran de caméra à faible brillance comportant des parois latérales et une paroi inférieure de manière à réduire la réflexion lumineuse et formant ainsi un obturateur. Les parois sont faites à partir d'un matériau permettant de réduire la réflexion lumineuse ou sont recouvertes d'un matériau présentant des propriétés antireflets. Un tel matériau peut être, par exemple, du caoutchouc, du silicone, un thermoplastique ou une peinture antireflet.

On connaît également de l'art antérieur la demande de brevet internationale WO 2019/045991 qui divulgue un autre système de caméra d'assistance à la conduite d'un véhicule automobile. Dans ce système de caméra, la fonction antireflet est obtenue au moyen d'une portion adjacente à la caméra comportant une surface structurée formant ainsi un obturateur. La surface structurée présente une première pluralité de cavités concaves, une deuxième pluralité de protubérances convexes et une troisième pluralité de cavités concaves. Ces pluralités présentent des configurations et des dimensions différentes afin d'obtenir un antireflet tel que cela est illustré sur les figures 4 à 7 de cette demande de brevet internationale. L'obturateur ainsi fabriqué présente un indice de brillance relativement élevée, de l'ordre de 1,0 GU (« Gloss Unit » en anglais), voire plus, pour chacun des angles de réflexion du système de mesure : 20°, 60° et 85°.

US 2015/015713 Al divulgue un système de vision pour véhicule comprenant un support, un écran de protection contre les lumières parasites et un module de caméra, le support étant configuré pour être fixé à une surface du pare-brise du véhicule située à l'intérieur de l'habitacle.

De tels systèmes de caméra sont destinés à être montés par les fabricants de vitrages pour véhicules automobiles sur les parebrises de véhicules neufs produits en très grande série (plusieurs milliers à plusieurs millions d'exemplaires). Par conséquent, ces systèmes de caméra sont bien adaptés à la fabrication en grandes séries, par exemple en mettant en œuvre, pour la fabrication de l'embase, un procédé d'injection plastique ou par moulage. En revanche, en ce qui concerne la production de petites séries, notamment dédiées au remplacement de parebrises des véhicules en cours d'exploitation, ce processus de fabrication n'est pas adapté pour des raisons évidentes de complexité de mise en œuvre et de coût, en particulier lorsqu'il est nécessaire d'utiliser l'injection plastique. En effet, ce procédé nécessite la fabrication d'un moule d'injection complexe et coûteux à obtenir.

On connaît des moyens de production destinés aux petites séries, voire aux très petites séries ou même à l'unité (par exemple, pour la fabrication de prototypes), tels que l'impression tridimensionnelle, également dénommée fabrication additive. Cependant, il est compliqué, voire impossible, d'obtenir au moyen de l'impression tridimensionnelle des structures telle que vues précédemment, comme par exemple des picots de petites dimensions, ou un grain de surface spécifique ou de petites nervures. Il est connu que l'impression tridimensionnelle ne permet pas la réalisation de surfaces comportant des éléments nécessitant une trop grande précision de réalisation. La mise en œuvre de peintures pose quant à elle des problèmes d'Environnement-Hygiène-Sécurité car les normes actuelles imposent l'utilisation de cabines de peinture spécifiques, coûteuses et volumineuses.

Le but de l'invention est donc de pallier les inconvénients de l'art antérieur en proposant un procédé de fabrication d'un vitrage permettant de réaliser des petites séries de vitrage, voire des vitrages à l'unité, adapté(s) pour un système d'assistance à la conduite de véhicules présentant en outre un moyen d'atténuation de la réflexion lumineuse efficace, simple et peu onéreux.

Pour ce faire, l'invention se rapporte ainsi, dans son acceptation la plus large, à un procédé de fabrication d'un vitrage selon la revendication 1. Ce vitrage comporte un élément vitré et une embase destinée à un système d'assistance à la conduite d'un véhicule, ledit système comportant un capteur de lumière, notamment une caméra, ladite embase présentant des moyens de fixation dudit capteur de lumière et un emplacement d'obturation, le procédé comportant les étapes successives suivantes :
- une étape d'obtention par impression tridimensionnelle de ladite embase ;
- puis une étape de dépose d'un flocage comportant des fibres, de préférence noires, sur ledit emplacement d'obturation ;
- puis une étape de fixation de ladite embase audit élément vitré, de préférence une étape de fixation de ladite embase à une face intérieure dudit élément vitré.

Le procédé selon l'invention permet de produire des petites séries de vitrages pour système d'assistance à la conduite d'un véhicule automobile de manière simple et en un temps relativement court. Il est également possible de fabriquer à l'unité de tels vitrages. De cette manière, lorsqu'il est nécessaire de remplacer le vitrage d'un véhicule automobile spécifique comportant un système d'assistance à la conduite, la fabrication du vitrage comportant l'embase peut être réalisée à court délai, par exemple à proximité du lieu de remplacement du vitrage. Le véhicule automobile est ainsi immobilisé pour une courte période.

De préférence, préalablement à l'étape de dépose d'un flocage :
- une étape d'obtention d'un film de flocage est réalisée, ledit film de flocage comportant des fibres de flocage sur une première face et sur une seconde face une colle protégée par un film pelable, puis
- une étape de retrait du film pelable est réalisée.

La mise en œuvre d'un tel film, dénommé également adhésif double-face, apporte une simplification supplémentaire au procédé selon l'invention.

De préférence, préalablement à l'étape de dépose d'un flocage une étape d'application d'une colle sur ledit emplacement d'obturation est réalisée. Le flocage peut alors se présenter sous la forme d'un film supportant des fibres, ce film étant ainsi ensuite collé par ladite colle.

De préférence, l'étape de dépose d'un flocage est réalisée par pulvérisation des fibres chargées électrostatiquement.

La pulvérisation de fibres chargées électrostatiquement est mise en œuvre aisément, permettant de rendre le procédé encore plus simple.

L'invention concerne en outre une embase de système de caméra d'assistance à la conduite d'un véhicule, obtenue par le procédé selon la présente invention, ledit système comportant un capteur de lumière, notamment une caméra, ladite embase présentant des moyens de fixation dudit capteur de lumière et un emplacement d'obturation comportant un flocage comportant des fibres, de préférence noires.

De préférence, ledit flocage comporte des fibres présentant une longueur comprise entre 0,5 et 0,8 mm afin de ne pas entrer en contact avec la face intérieure dudit élément vitré et ne pas provoquer elles-mêmes des reflets.

De préférence, ledit flocage présente une densité de fibres comprise entre 250 et 750 fibres par mm² afin de réaliser une meilleure fonction antireflet.

Avantageusement, ledit flocage comporte un film comprenant lesdites fibres sur une première face et une colle sur une seconde face disposée au contact dudit emplacement d'obturation.

Avantageusement, ledit emplacement d'obturation est en creux par rapport à une face extérieure de ladite embase et est donc difficile d'accès. Le flocage selon l'invention est facile et rapide à appliquer dans cet emplacement difficile d'accès.

L'invention porte en outre sur un vitrage comportant un élément vitré et une embase selon l'invention, ladite embase présentant des moyens de fixation dudit capteur de lumière et un emplacement d'obturation comportant un flocage comportant des fibres, de préférence noires.

On décrira ci-après, à titre d'exemples non limitatifs, plusieurs formes d'exécution de la présente invention, en référence aux figures annexées sur lesquelles :
- [Fig.1] illustre une vue de face, de l'extérieur, d'un vitrage, et plus précisément ici d'un pare-brise de véhicule, destiné à être situé à l'avant d'un véhicule, et en particulier un véhicule automobile et comportant un système de caméra d'assistance à la conduite de véhicule selon un mode de réalisation préféré de l'invention ;
- [Fig.2] illustre schématiquement une vue de détail, de l'extérieur, du vitrage illustré sur la [Fig.1] ;
- [Fig.3] illustre une vue en perspective d'une étape du procédé de fabrication selon l'invention durant laquelle un flocage est déposé sur un emplacement d'obturation d'une embase de caméra selon l'invention ;
- [Fig.4] représente une vue en perspective de l'embase de caméra comprenant le flocage, suite à la réalisation de l'étape du procédé de fabrication illustrée sur la [Fig.3] ; et
- [Fig.5] représente sous la forme d'un logigramme des étapes du procédé de fabrication selon l'invention.

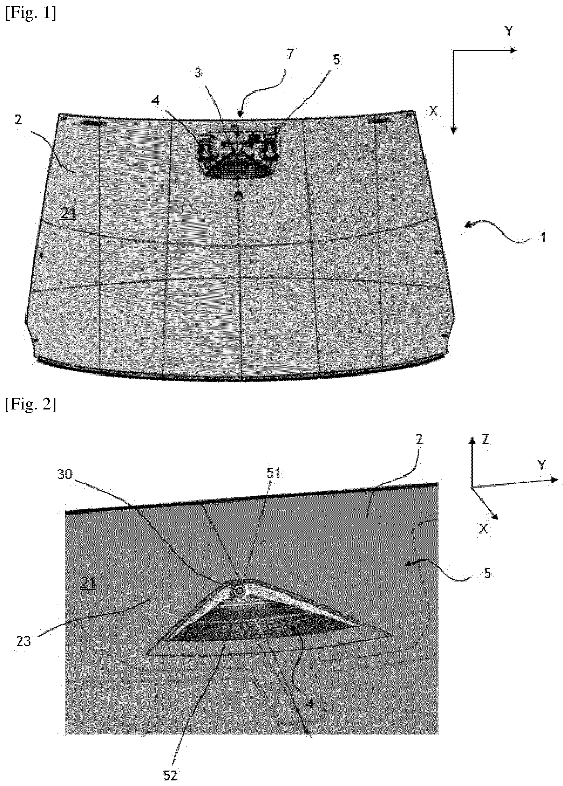

Dans ces figures, les proportions entre les différents éléments sont respectées sur chaque figure et les éléments en arrière-plan sont représentés par transparence en [Fig.1], afin de faciliter sa lecture.

Dans le(s) mode(s) de réalisation de l'invention, il est décrit un vitrage 1 comportant un élément vitré 2 comportant une ou plusieurs feuilles. L'élément vitré 2 peut être monolithique, c'est-à-dire constitué d'une feuille de matière unique, ou être composite, c'est-à-dire constitué de plusieurs feuilles de matière entre lesquelles est insérée au moins une couche intermédiaire de matière adhérente, dans le cas d'un élément vitré 2 feuilleté. La (ou les) feuille(s) de matière peut (ou peuvent) être minérale(s), notamment en verre, ayant par exemple subi un recuit ou une trempe, ou organique(s), notamment en matière plastique telle que le polyvinylbutyral. La couche intermédiaire contient de préférence au moins une matière plastique thermoplastique, de préférence du polyvinylbutyral (PVB), de l'éthylènevinylacétate (EVA), et/ou du polyéthylène téréphtalate (PET). Toutefois, la couche intermédiaire thermoplastique peut également contenir, par exemple, du polyuréthane (PU), du polypropylène (PP), du polyacrylate, du polyéthylène (PE), du polycarbonate (PC), du polyméthacrylate de méthyle, du chlorure de polyvinyle, de la résine de polyacétate, des résines de coulée, des acrylates, de l'éthylène-propylène fluoré, du fluorure de polyvinyle et/ou de l'éthylène-tétrafluoroéthylène, ou des copolymères ou des mélanges de ceux-ci. La couche intermédiaire thermoplastique peut être formée d'un ou de plusieurs films thermoplastiques superposés, l'épaisseur d'un film thermoplastique ne dépassant pas, de préférence, 1 mm, notamment de 0,25 mm ou 0,5 mm à 1 mm ou 0,9 mm, typiquement autour de 0,7 mm à 0,8 mm.

La [Fig.1] illustre une vue de dessus d'un vitrage 1 de véhicule, comme par exemple un véhicule automobile, comprenant un système 7 d'assistance à la conduite de véhicule selon un mode de réalisation de l'invention.

Le vitrage 1 comporte ainsi, outre l'élément vitré 2, une embase 5 qui est destinée à permettre d'attacher mécaniquement et de manière réversible, un accessoire, et de préférence comme illustré ici d'attacher plusieurs accessoires, dont l'un au moins est un capteur de lumière.

Le vitrage 1 est destiné à fermer une baie réalisant une séparation entre un espace intérieur, situé à l'intérieur du véhicule et un espace extérieur, situé à l'extérieur du véhicule. L'élément vitré 2 présente ainsi une face extérieure 21 destinée à être tournée vers l'espace extérieur, une face intérieure, destinée à être tournée vers l'espace intérieur, ainsi qu'un chant périphérique. Les notions de « extérieur » et « intérieur » sont donc considérées dans le présent document respectivement par rapport à cet espace extérieur (ou orienté vers cet espace extérieur) et cet espace intérieur (ou orienté vers cet espace intérieur).

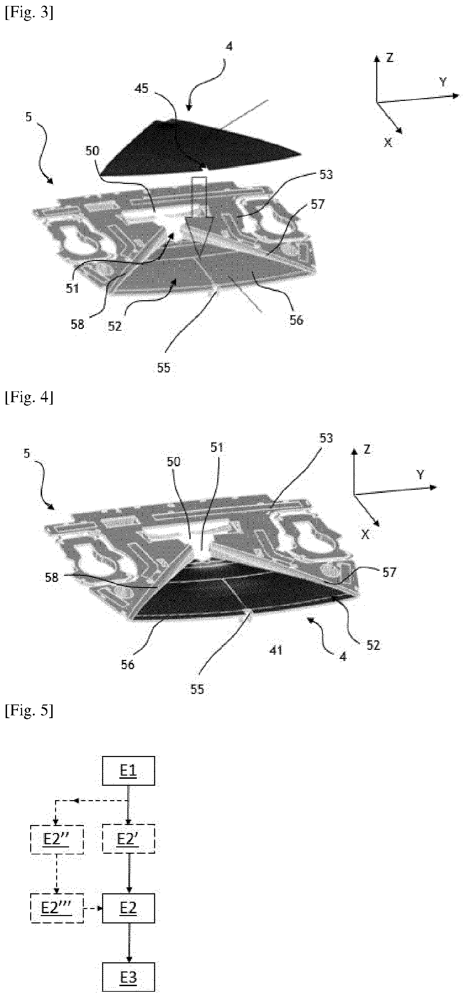

Le vitrage 1 s'étend selon l'axe généralement appelé « l'axe X » du véhicule automobile, qui est l'axe longitudinal central d'avancé du véhicule automobile équipé du vitrage selon l'invention et qui correspond à l'axe X en [Fig.1] à [Fig.4]. Le vitrage 1 s'étend en outre suivant les axes Y et Z, qui sont respectivement l'axe transversal et l'axe vertical du véhicule automobile.

L'élément vitré 2 peut être plat ou bombé.

L'embase 5, autrement appelée « platine » ou « bracket » en anglais, doit permettre d'attacher réversiblement à l'élément vitré 2 le capteur de lumière, qui est accessible par l'intérieur du véhicule. En général, ce capteur de lumière n'est pas accessible directement à l'usager situé à l'intérieur du véhicule et se trouve caché sous un capot.

Cette embase doit permettre d'attacher réversiblement à l'élément vitré ce capteur de lumière qui peut être qualifié « de capteur de lumière à visée extérieure » dans le sens où il doit être positionné avec une partie orientée vers l'extérieur du véhicule, en visvis d'une face intérieure de l'élément vitré 2 ; ce peut être par exemple un capteur destiné à capter des informations lumineuses provenant de l'extérieur.

En d'autres termes, l'invention est située dans le domaine technique des embases, ou platines, pour la fixation d'un ou de plusieurs accessoires, dont l'un au moins est un capteur de lumière intérieur à visée extérieure et comportant au moins un logement, pour l'accueil et la fixation de ce capteur de lumière à visée extérieure, cette embase comportant en outre :
- une partie de visée 51, sans matière d'embase, qui permet au capteur de lumière de capter la lumière visible et/ou infrarouge venant de l'extérieur, et
- un emplacement d'obturation 52, ou un pare-soleil, ou encore « shutter» en anglais, constituant une partie tournée vers l'extérieur dans un but de diminuer ou parer des reflets nocifs au bon fonction de la partie du capteur de lumière située dans la partie de visée.

Ce capteur de lumière peut être en particulier un capteur optique et notamment une caméra.

De préférence, l'embase 5 est disposée sensiblement dans la partie médiane du vitrage 1, vers sa partie supérieure lorsque le vitrage 1 est installé dans la baie du véhicule. Ainsi, l'embase 5 ne gêne pas la vision du conducteur du véhicule. L'embase 5 est cachée pour l'essentiel, vue de l'extérieur, derrière une couche opaque 23, comme par exemple une couche d'émail noir, appartenant à l'élément vitré 2, sauf son emplacement d'obturation 52. L'embase 5 est cachée de l'intérieur derrière un capot (non illustré).

L'embase 5 est à base de matière plastique et présente un corps, une face extérieure 53 destinée à être située en vis-à-vis de la face intérieure de l'élément vitré, une face intérieure tournée vers l'intérieur et un logement 50 pour la fixation du capteur de lumière en regard de la face intérieure de l'élément vitré afin qu'il puisse capter à travers l'élément vitré 2.

Le corps est situé entre la face extérieure 53 et la face intérieure ; il désigne la matière constitutive de l'embase qui est située entre ses deux faces et qui est recouverte par ces faces. La présente invention est particulièrement adaptée lorsque l'élément vitré est bombé car la face extérieure 53 est alors difficile à réaliser du fait qu'elle doit suivre la courbure de l'élément vitré.

Le logement 50 est un endroit de l'embase 5 où à la fois il y a un creux ou un trou d'une forme particulière car il est destiné à permettre de positionner le capteur de lumière déjà mentionné et à la fois des moyens pour attacher réversiblement ce capteur de lumière à l'embase 5, comme par exemple des crochets ou des ergots ou des clips.

Le système 7 est connecté à un contrôleur chargé d'analyser les images provenant du capteur de lumière, qui est ici une caméra 3 présentant une lentille 31 située dans la partie de visée 51 lorsque la caméra est attachée à l'embase 5, comme visible en [Fig.2]. Le contrôleur interagit avec des dispositifs dédiés à l'assistance, installés sur le véhicule automobile, tels qu'un avertisseur de franchissement de lignes, un dispositif de freinage d'urgence en réponse à la détection d'un piéton ou un avertisseur de dépassement de vitesse maximale en réponse à l'analyse d'un panneau de limitation de vitesse.

La lentille 30 de la caméra 3 est orientée vers l'avant lorsque le système 7 est installé sur le véhicule. Ainsi, la caméra 3 acquiert des images provenant de l'avant du véhicule. Bien que la présente invention soit décrite pour un système 7 orienté vers l'avant, elle est également applicable à d'autres configurations présentant un champ de vision différent telles qu'un système 7 orienté vers l'arrière ou vers l'un des côtés du véhicule, voire plusieurs côtés lorsqu'il est mis en œuvre plusieurs systèmes 7.

L'emplacement d'obturation 52 ou « obturateur » comporte une surface 56, sensiblement plane, s'étendant à partir de la partie de visée 51 et en direction de la face intérieure de l'élément vitré vers le bas, ainsi que deux parois latérales 57 et 58, s'étendant également à partir de la partie de visée 51 et en direction de la face intérieure de l'élément vitré vers les côtés.

L'emplacement d'obturation 52 comporte un flocage 4 afin de réduire, voire de supprimer, la réflexion de lumière provenant de l'extérieur, telle que la lumière du soleil, pouvant dégrader la qualité des images acquises par la caméra 3. De préférence, le flocage 4 comporte des fibres présentant une longueur comprise entre 0,5 et 0,8 mm, voire entre 0,6 et 0,7 mm. Ainsi, les reflets indésirables sont captés, ou absorbés, par le flocage et les fibres sont suffisamment courtes pour ne pas entrer en contact avec la face intérieure de l'élément vitré et ne pas risquer de provoquer elle-même des reflets indésirables.

De préférence, le flocage 4 présente une densité comprise entre 250 et 750 fibres par mm² afin d'atténuer correctement, et de préférence supprimer, les reflets indésirables. De préférence, les fibres sont disposées sensiblement perpendiculairement par rapport à la surface 56 de l'obturateur. De manière préférée, les fibres sont de couleur noire pour ne pas elle-même provoquer de micro-reflet. De préférence, les fibres sont faites d'un matériau à base de polyamide ou de polyéthersulfone.

Le flocage 4 présente un indice de brillance inférieur ou égal à 0,3 GU pour chacun des angles de réflexion du système de mesure : 20°, 60° et 85° (l'indice de brillance inférieur ou égal à 0,3 GU pour l'angle de réflexion du système de mesure de 85° est le plus difficile à obtenir). Le flocage 4 permet ainsi de réduire fortement la réflexion lumineuse en comparaison des systèmes d'assistance de l'art antérieur présentant un indice de brillance inférieur ou égal à 1,0 GU. L'invention a ainsi pour avantage d'améliorer la qualité des images acquises par la caméra 3. Par conséquent, l'assistance au conducteur est nettement améliorée.

Le flocage est présent sur au moins une partie, et de préférence la totalité de la surface 56, sensiblement plane, de l'emplacement d'obturation 52 ; il peut en outre être présent sur les parois latérales 57 et 58 de l'emplacement d'obturation 52.

Dans un mode de réalisation alternatif (non illustré), un film comporte le flocage 4 sur une première face orientée vers l'extérieur et présente une seconde face qui est orientée vers l'emplacement d'obturation 52. Le film est collé à l'emplacement d'obturation 52 au moyen d'une colle. De préférence, le film est fait à partir d'un matériau tel que de la polyoléfine, du polypropylène ou du polyamide.

Dans le mode de réalisation présenté, le flocage 4 est réparti de manière sensiblement uniforme sur la totalité de la surface 56, selon une géométrie de forme triangulaire sans être présent sur les parois latérales 57 et 58 de l'emplacement d'obturation 52. Le flocage 4 peut présenter d'autres configurations géométriques afin de s'adapter à la géométrie de l'obturateur présent dans d'autres systèmes 7 de caméra d'assistance à la conduite automobile.

Différentes étapes du procédé sont présentées en [Fig.5].

Dans une étape E1 du procédé selon l'invention, l'embase 5 est fabriquée en petite série, voire à l'unité, par un moyen d'impression tridimensionnelle. Il peut par exemple être mis en œuvre une imprimante tridimensionnelle utilisant :
- le dépôt de fil ou l'extrusion de fil : Un filament plastique est fondu et déposé sur une plateforme d'impression, formant l'embase couche après couche ;
- la photopolymérisation : Un laser ou une source de lumière solidifie une résine liquide et photosensible, point par point ou couche par couche pour former l'embase ;
- la fusion de poudre : Un laser fusionne des particules de poudre point par point pour former l'embase.

Cette étape E1 peut permettre d'obtenir une embase réalisée dans un matériau opaque et mat, c'est-à-dire non brillant et à faible pouvoir réfléchissant. Ce matériau peut être noir, et en particulier noir mat.

Cette étape E1 de fabrication de l'embase peut être réalisée in situ, sur l'élément vitré 2, pour gagner du temps, mais cela nécessite une machine de grande dimension, compatible avec la dimension de l'élément vitré.

Lors d'une étape E2, le flocage 4 est positionné sur l'emplacement d'obturation 52 de l'embase 5 de manière à former l'obturateur. La double flèche en [Fig.3] illustre cette étape E2. Cette étape peut être réalisée en appliquant d'abord une colle sur l'emplacement d'obturation 52 puis un film comportant des fibres sur cette colle ou en appliquant sur l'emplacement d'obturation 52 un film comportant sur une face extérieure des fibres et sur une face intérieure une colle.

De préférence, avant l'étape E2 de dépôt du flocage 4, on obtient lors d'une étape E2'', un film comportant des fibres de flocage sur une première face et, sur une seconde face, une colle protégée par un élément pelable. Ensuite, lors d'une étape E2‴, on retire l'élément pelable.

Le flocage 4 présente une forme de triangle et comporte, sur la base du triangle, une découpe 45. L'emplacement d'obturation 52 présente une forme triangulaire destinée à recevoir le flocage 4, coopérant avec la forme triangulaire du flocage 4. L'emplacement d'obturation 52 comporte en outre un ergot 55 agencé sensiblement au milieu de la base du triangle destinée à recevoir la découpe 45 du flocage 4. La découpe 45 et l'ergot 55 présentent des dimensions permettant de coopérer entre eux. De préférence, la découpe 45 présente une forme sensiblement rectangulaire femelle et l'ergot 55 présente une forme sensiblement rectangulaire mâle. Lors de l'étape E2 du dépôt du flocage 4 sur l'emplacement d'obturation 52, l'ergot 55 se loge dans la découpe 45. Alternativement, d'autres formes géométriques peuvent également convenir telles que la forme d'un carré, d'un cercle ou d'un triangle. La découpe 45 et l'ergot 55 forment ainsi un repère de positionnement du flocage 4 lors de l'étape E2 de dépose du flocage 4.

Alternativement, le dépôt du flocage 4 est mis en œuvre par pulvérisation, en chargeant électrostatiquement les fibres du flocage 4. De préférence, on applique alors lors d'une étape E2', avant l'étape E2 de dépôt du flocage 4, une colle sur l'emplacement d'obturation 52 apte à retenir les fibres du flocage 4.

En [Fig.4], il est illustré l'embase 5 comprenant le flocage 4. Dans une étape ultérieure (non illustrée), on intègre la caméra 3 afin d'obtenir un système 7 de caméra d'assistance à la conduite d'un véhicule automobile et, éventuellement, d'autres dispositifs tels qu'un capteur de pluie ou un capteur de luminosité. Ce peut être en particulier la caméra qui était présente sur un autre élément vitré du véhicule lorsqu'il est souhaité remplacé l'élément vitré en conservant la caméra. L'embase 5 est finalement fixée à l'élément vitré 2 pour obtenir le vitrage 1.

Le procédé selon l'invention a pour avantage de faciliter la fabrication de l'embase de système de caméra d'assistance à la conduite d'un véhicule. Le procédé permet une dépose rapide et simple du flocage antireflet. En effet, dans l'état de la technique, on met en œuvre des moyens de production par injection plastique nécessitant la fabrication de moules relativement complexes à obtenir. Concernant la fonction antireflet, dans l'art antérieur, il est mis en œuvre des procédés peu adaptés à la production de petites séries tels la dépose d'une peinture, l'obtention de nervures par injection plastique, l'application d'une feuille de caoutchouc (EPDM), l'obtention de surfaces présentant une granulométrie très fine ou l'application d'une feuille de thermoplastique (TPV oléfinique vulcanisé). Le procédé selon l'invention permet par conséquent de s'affranchir de moyens complexes à mettre en œuvre pour la fabrication de petites séries ou pour la fabrication à l'unité d'un vitrage comportant une embase de système de caméra d'assistance à la conduite d'un véhicule.

L'embase 5 est destinée à être fixée dans une étape E3, par exemple par collage, sur la face intérieure de l'élément vitré 2 présentant de manière localisée un émail noir, sauf à l'endroit en vis-à-vis de l'emplacement d'obturation. Le vitrage 1 est ensuite installé dans la baie du véhicule automobile.

## Revendications

1. Procédé de fabrication d'un vitrage (1) comportant un élément vitré (2) et une embase (5) destinée à un système (7) d'assistance à la conduite d'un véhicule, ledit système comportant un capteur de lumière, notamment une caméra (3), ladite embase (5) présentant des moyens de fixation dudit capteur de lumière et un emplacement d'obturation (52), le procédé comportant les étapes successives suivantes :
- une étape (E1) d'obtention par impression tridimensionnelle de ladite embase (5) ;
- puis une étape (E2) de dépose d'un flocage (4) comportant des fibres, de préférence noires, sur ledit emplacement d'obturation (52) ;
- puis une étape (E3) de fixation de ladite embase (5) audit élément vitré (2), de préférence une étape de fixation de ladite embase (5) à une face intérieure dudit élément vitré (2).

2. Procédé selon la revendication 1 dans lequel, préalablement à l'étape (E2) de dépose d'un flocage (4) :
- une étape (E2") d'obtention d'un film de flocage est réalisée, ledit film de flocage comportant des fibres de flocage sur une première face et sur une seconde face une colle protégée par un film pelable, puis
- une étape (E2‴) de retrait du film pelable est réalisée.

3. Procédé selon la revendication 1 dans lequel, préalablement à l'étape (E2) de dépose d'un flocage (4) une étape (E2') d'application d'une colle sur ledit emplacement d'obturation (52) est réalisée.

4. Procédé selon la revendication 3 dans lequel l'étape (E2) de dépose d'un flocage (4) est réalisée par pulvérisation de fibres chargées électrostatiquement.

5. Embase (5) de système (7) de caméra d'assistance à la conduite d'un véhicule, obtenue par le procédé selon l'une quelconque des revendications 1 à 4, ledit système comportant un capteur de lumière, notamment une caméra (3), ladite embase (5) présentant des moyens de fixation dudit capteur de lumière et un emplacement d'obturation (52) comportant un flocage (4) comportant des fibres, de préférence noires.

6. Embase (5) selon la revendication 5 dans laquelle lesdites fibres présentant une longueur comprise entre 0,5 et 0,8 mm.

7. Embase (5) selon l'une quelconque des revendications 5 à 6 dans laquelle ledit flocage (4) présente une densité de fibres comprise entre 250 et 750 fibres par mm².

8. Embase (5) selon l'une quelconque des revendications 5 à 7 dans laquelle ledit flocage (4) comporte un film comprenant lesdites fibres sur une première face et une colle sur une seconde face disposée au contact dudit emplacement d'obturation (52).

9. Embase (5) selon l'une quelconque des revendications 5 à 8 dans laquelle ledit emplacement d'obturation (52) est en creux par rapport à une face extérieure (53) de ladite embase (5).

10. Vitrage (1) comportant un élément vitré (2) et une embase (5) selon l'une quelconque des revendications 5 à 9.

## Patentansprüche

1. Verfahren zum Herstellen einer Verglasung (1), die ein verglastes Element (2) und eine Basis (5) aufweist, die für ein Fahrassistenzsystem (7) eines Fahrzeugs bestimmt ist, wobei das System einen Lichtsensor, insbesondere eine Kamera (3), aufweist, wobei die Basis (5) Mittel zum Befestigen des Lichtsensors und eine Blendenstelle (52) aufweist, wobei das Verfahren die folgenden aufeinanderfolgenden Schritte aufweist:
- einen Schritt (E1) zum Erhalten der Basis (5) durch dreidimensionales Drucken;
- dann einen Schritt (E2) zum Aufbringen einer Beflockung (4), die Fasern aufweist, die vorzugsweise schwarz sind, auf die Blendenstelle (52);
- dann einen Schritt (E3) zum Befestigen der Basis (5) an dem verglasten Element (2), vorzugsweise einen Schritt zum Befestigen der Basis (5) an einer inneren Fläche des verglasten Elements (2).

2. Verfahren nach Anspruch 1, wobei vor dem Schritt (E2) des Aufbringens einer Beflockung (4):
- ein Schritt (E") zum Erhalten einer Flockfolie durchgeführt wird, wobei die Flockfolie auf einer ersten Fläche Flockfasern und auf einer zweiten Fläche einen Klebstoff aufweist, der durch eine abziehbare Folie geschützt ist, dann
- ein Schritt (E2‴) zum Entfernen der abziehbaren Folie durchgeführt wird.

3. Verfahren nach Anspruch 1, wobei vor dem Schritt (E2) des Aufbringens einer Beflockung (4) ein Schritt (E2') zum Auftragen eines Klebstoffs auf die Blendenstelle (52) durchgeführt wird.

4. Verfahren nach Anspruch 3, wobei er Schritt (E2) des Aufbringens einer Beflockung (4) durch Aufsprühen elektrostatisch aufgeladener Fasern durchgeführt wird.

5. Basis (5) eines Fahrassistenzkamerasystems (7) eines Fahrzeugs, die durch das Verfahren nach einem der Ansprüche 1 bis 4 erhalten wird, wobei das System einen Lichtsensor, insbesondere eine Kamera (3), aufweist, wobei die Basis (5) Mittel zum Befestigen des Lichtsensors und eine Blendenstelle (52) vorweist, die eine Beflockung (4) aufweist, die Fasern aufweist, die vorzugsweise schwarz sind.

6. Basis (5) nach Anspruch 5, wobei die Fasern eine Länge zwischen 0,5 und 0,8 mm vorweisen.

7. Basis (5) nach einem der Ansprüche 5 bis 6, wobei die Beflockung (4) eine Faserdichte zwischen 250 und 750 Fasern pro mm² vorweist.

8. Basis (5) nach einem der Ansprüche 5 bis 7, wobei die Beflockung (4) eine Folie aufweist, umfassend auf einer ersten Fläche die Fasern und auf einer zweiten Fläche einen Klebstoff, der in Kontakt mit der Blendenstelle (52) angeordnet ist.

9. Basis (5) nach einem der Ansprüche 5 bis 8, wobei die Blendenstelle (52) relativ zu einer Außenfläche (53) der Basis (5) hohl ist.

10. Verglasung (1), die ein verglastes Element (2) und eine Basis (5) nach einem der Ansprüche 5 bis 9 aufweist.

## Claims

1. A method for manufacturing a glazed unit (1) including a glazed element (2) and a base (5) intended for a vehicle driver assistance system (7), said system including a light sensor, in particular a camera (3), said base (5) having means for attaching said light sensor and a shutter position (52), the method including the following successive steps:
- a step (E1) of obtaining said base (5) by three-dimensional printing;
- then a step (E2) of depositing flocking (4) including fibers, preferably black fibers, on said shutter position (52);
- then a step (E3) of attaching said base (5) to said glazed element (2), preferably a step of attaching said base (5) to an inner face of said glazed element (2).

2. The method according to claim 1, wherein, prior to the step (E2) of depositing flocking (4):
- a step (E2") of obtaining flocking film is carried out, said flocking film including flocking fibers on a first face and on a second face an adhesive protected by a peelable film, then
- a step (E2‴) of removing the peelable film is carried out.

3. The method according to claim 1, wherein, prior to the step (E2) of depositing flocking (4), a step (E2') of applying an adhesive to said shutter position (52) is carried out.

4. The method according to claim 3, wherein the step (E2) of depositing flocking (4) is carried out by spraying electrostatically charged fibers.

5. A base (5) for a vehicle driver assistance camera system (7), obtained by the method according to any one of claims 1 to 4, said system including a light sensor, in particular a camera (3), said base (5) having means for attaching said light sensor and a shutter position (52) including flocking (4) including fibers, preferably black.

6. The base (5) according to claim 5, wherein said fibers have a length of between 0.5 and 0.8 mm.

7. The base (5) according to either one of claims 5 to 6, wherein said flocking (4) has a fiber density comprised between 250 and 750 fibers per mm².

8. The base (5) according to any one of claims 5 to 7, wherein said flocking (4) includes a film including said fibers on a first face and an adhesive on a second face arranged in contact with said shutter position (52).

9. The base (5) according to any one of claims 5 to 8, wherein said shutter position (52) is recessed relative to an exterior face (53) of said base (5).

10. A glazed unit (1) including a glazed element (2) and a base (5) according to any one of claims 5 to 9.
